# EUROPEAN PATENT APPLICATION

(11) **EP 2 892 292 A1**
(43) Date of publication of application: **08.07.2015**
(21) Application number: 14368003.1
(22) Date of filing: 06.01.2014
(51) Int. Cl.: H04W 72/04, H04W 76/02

(54) **A small cell base station, a macrocell base station, a core network node, and a method of sending control messages to a user terminal that is uplink-connected to a small cell base station and down-link connected to another base station**

(71) Applicant: ALCATEL LUCENT, 92100 Boulogne-Billancourt (FR)
(72) Inventor: Wong, Shin Horng, Swindon, Wiltshire SN5 7DJ (GB); Puddle, Nicola, Swindon, Wiltshire SN5 7DJ (GB); Brend, Graham R., Swindon, Wiltshire SN5 7DJ (GB)
(74) Representative: Sarup, David Alexander

(57) **Abstract**

A method is provided of sending a control message to a user terminal that is uplink-connected to a small cell base station and downlink-connected to another base station in a wireless cellular telecommunications network. The base stations are interconnected by at least one core network node. The method comprising the steps of: the small cell base station formatting the control message, transmitting the control message from the small cell base station via the at least one core network node to said another base station, and said another base station transmitting said control message over air to the user terminal for reception. The network comprises multiple base stations and user terminals, and the message comprises an identifier of said another base station and an identifier of said user terminal.

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as small cells, macrocells, picocells, or femtocells, but we use the term small cells generically for cells that are smaller than macrocells. One way to establish a small cell is to provide a small cell base station that operates within a relatively limited range within the coverage area of a macrocell. One example of use of a small cell base station is to provide wireless communication coverage within a building.

The small cell base station is of a relatively low transmit power and hence each small cell is of a small coverage area compared to a macrocell.

Small cell base stations arc low power base stations suitable for providing cellular telecommunications service in residential or enterprise environments. They have auto-configuring properties so as to support plug-and play deployment by users, for example in which small cell base stations may integrate themselves into an existing macrocell network by connecting to the core network of the macrocell network. A network that includes both small cells and macrocells is often referred to as a heterogeneous network (HetNet).

Small cell base stations are often deployed to improve the capacity of the network. Such cell cells are deployed at locations of significant user terminal activity (often referred to as hotspots).

A consideration in heterogeneous networks is how to successfully integrate macrocells and small cells without each causing issues for the other, or for user terminals. For example, as a macrocell base station transmits at significantly higher powers than small cell base stations within the macrocell, user terminals can experience interference issues, particularly when roaming through the network. These are interference issues that would not occur if there were only macrocells present in the network. These interference issues tend to be worse in a common scenario whereby the same frequency carrier is used by both the macrocell base station and the small cell base station within the coverage area of the macrocell base station. This use of the same frequency carrier is known as co-channel deployment and the consequential interference is known as co-channel interference.

In co-channel interference, an imbalance of the downlink (DL)-uplink (UL) signal may be experienced at various points in the network since the uplink signal received from the user terminal at each base station is not dependent upon the downlink transmit power of the base stations.

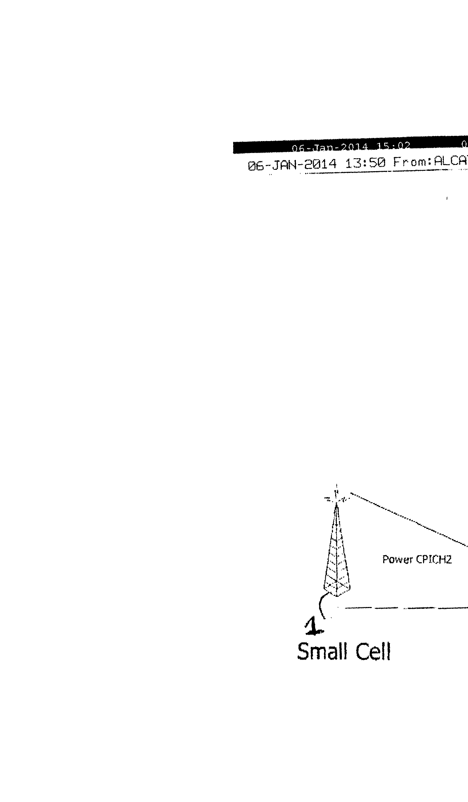

As shown in Figure 1, when moving between the small cell base station 1 and macrocell base station (Base Transceiver Station, BTS) 3, an optimal position for handing over the user terminal connection to the network, from considering uplink power, is when the path loss to the small cell base station 1 and the path loss to the macrocell base station 3 are the same. This position is indicated in Figure 1 as border 5. However, the downlink transmit powers received at the user terminal from each base station are not equal at that position. Specifically, the downlink signal from the macrocell base station 3 is stronger than the downlink power from the small cell base station 1 so from a downlink power perspective the user terminal's serving base station should not yet be changed.

On the other hand, an optimal position for handing over the user terminal connection to the network from considering downlink power, indicated as border 7 in Figure 1, is where the received power of pilot signals from both the small cell base station 1 and macrocell base station 3 are the same. These pilot signals are Common Pilot Channel, CPICH, signals. However, then the attenuation (path loss) from the user terminal to the macrocell base station 3 is much greater than to the small cell base station 1, in other words the signal magnitude received from the user terminal at the small cell base station is different to that at the macrocell base station. Accordingly, from the perspective of uplink power, the user terminal's serving base station should not be changed at this point.

These inequalities result in a region 9 between the two borders 5,7, which we denote as a downlink-uplink imbalance region.

In order to handle user terminals in this downlink-uplink imbalance region, a number of solutions have been considered. One known solution described in 3GPP Technical Report 25.800 entitled UMTS Heterogeneous networks is so-called decoupling of the uplink and downlink for a user terminal, for example E-DCH (Enhanced Dedicated Channel) decoupling. In this approach, the macrocell base station is no longer responsible for determining the UL transmit power budget allocation to the user terminal. Instead, the small cell base station is given responsibility for allocating uplink transmit resources, known as "UL grants", to user terminals.

If the user terminal is 3GPP Standard Release-12 compliant, this UL transmit resources allocation is sent directly from the small cell base station to the user terminal.

If the user terminal is not 3GPP Standard Release-12 compliant, in other words a legacy user terminal, the UL transmit resources allocation is sent from the small cell base station via the macro network to the macrocell base station to which the user terminal is anchored. The macrocell base station passes the UL transmit resources allocation to the user terminal. This is necessary since in this case a small cell base station is permitted by rule to increase the UL transmit resources allocation to a user terminal but not decrease that allocation.

### Summary

The reader is referred to the appended independent claims. Some preferred features arc laid out in the dependent claims.

An example of the present invention is a method of sending a control message to a user terminal that is uplink-connected to a small cell base station and downlink-connected to another base station in a wireless cellular telecommunications network. The base stations are interconnected by at least one core network node. The method comprising the steps of: the small cell base station building the control message, transmitting the control message from the small cell base station via the at least one core network node to said another base station, and said another base station transmitting said control message over air to the user terminal for reception. The network comprises multiple base stations and user terminals, and the message comprises an identifier of said another base station and an identifier said user terminal.

The inventors realised that for 3GPP Release 12-compliant user terminals, there will be scenarios in which the user terminal uplink signal is sufficient for the small cell base station to decode the user terminals uplink transport channel but the quality of the downlink signal from the small cell is not sufficient to provide uplink-resource control messages to the user terminal without unacceptable errors.

The inventors realised that in such scenarios, the small cell base station may use the macro network to provide the uplink-resource control data to the user terminal. This is done until the downlink signal from the small cell base station to the user terminal improves to the point that the small cell base station may send control messages directly to the user terminal over air that will be successfully received by the user terminal.

The inventors realised that, for legacy user terminals, namely that are not 3GPP Release 12 compliant, the small cell base station may similarly use the macro network to provide the uplink-resource control data to the user terminal. This is done until the downlink signal from the small cell base station to the user terminal improves to the point that the small cell may send control messages directly to the user terminal over air that will be successfully received by the user terminal.

In some preferred embodiments the small cell base station is a femtocell base station. A femtocell base station may be a Home NodeB, HNB, or Home enhanced NodeB, HeNB, to use Third Generation Partnership Project terminology.

In an embodiment the small cell base station may be a HNB, which may be deployed with an HNB-gateway, or may be a HeNB, which may be deployed with an X2-gateway.

The present invention in its various aspects also relates to a small cell base station, to a core network node, and to a macrocell base station.

### Brief Description of the Drawings

Embodiments of the present invention will now be described by way of example and with reference to the drawings, in which:
Figure 1 is a diagram illustrating the UL-DL imbalance scenario that occurs in a known a wireless communications network (PRIOR ART)
Figure 2 is a diagram illustrating a Universal Mobile Telecommunications System (UMTS) wireless cellular telecommunications network according to a first embodiment of the present invention,
Figure 3 is a diagram illustrating an UL-DL imbalance scenario in part of the network shown in Figure 1,
Figure 4 is a diagram illustrating an UL transmit resources allocation message as used in the network shown in Figures 2 and 3,
Figure 5 is a message sequence diagram illustrating operation of the network shown in Figures 2 and 3,
Figure 6 is a diagram illustrating a Long Term Evolution (LTE) wireless cellular telecommunications network according to a second embodiment of the present invention,
Figure 7 is a diagram illustrating an UL transmit resources allocation message as used in the network shown in Figure 6, and
Figure 8 is a schematic diagram illustrating operation of the network shown in Figure 6.

### Detailed Description

We now describe a network including femtocell base stations, then look in greater detail at situations where a small cell base station can receive signals sent uplink from a user terminal but the quality of the downlink signal transmitted from the small cell base station to the user terminal is insufficient to enable uplink-resource-control messages to be sent to the terminal directly. Those messages are instead sent via the network, including a macrocell base station, until the downlink signal from the small cell base station improves sufficiently.

### UMTS Example

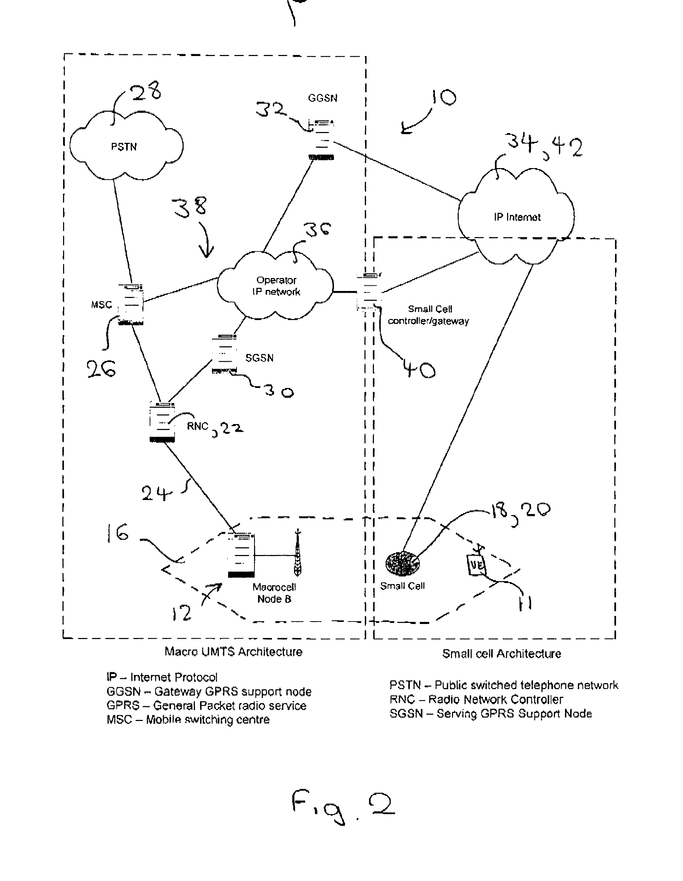

As shown in Figure 2, a network 10 for wireless communications of Universal Mobile Telecommunications System (UMTS) type, through which a user terminal 11 may roam, includes two types of base station, namely macrocell base stations and femtocell base stations (the latter being sometimes called "femtos"). One macrocell base station 12 is shown in Figure 2 for simplicity. Each macrocell base station has a radio coverage area 16 that is often referred to as a macrocell. The geographic extent of the macrocell 16 depends on the capabilities of the macrocell base station 12 and the surrounding geography.

Within the macrocell 16, each femtocell base station 18 provides wireless communications within a corresponding femtocell 20. A femtocell is a radio coverage area. The radio coverage area of the femtocell 20 is much less than that of the macrocell 16. For example, the fcmtocell 20 typically corresponds in size to a user's office or home.

As shown in Figure 2, the network 10 is managed by a radio network controller, RNC, 22. The radio network controller, RNC, 22 controls the operation, for example by communicating with macrocell base stations 12 via backhaul communications links 24. The radio network controller 22 maintains a neighbour list which includes information about the geographical relationship between cells supported by base stations. In addition, the radio network controller 22 maintains location information which provides information on the location of the user equipment within the wireless communications system 10. The radio network controller 22 is operable to route traffic via circuit-switched and packet-switched networks. For circuit-switched traffic, a mobile switching centre MSC 26 is provided with which the radio network controller 22 may communicate. The mobile switching centre 26 communicates with a circuit-switched network such as a public switched telephone network (PSTN) 28. For packet-switched traffic, the radio network controller 22 communicates with serving general packet radio service support nodes (SGSNs) 30 and a gateway general packet radio support node (GGSN) 32. The GGSN then communicates with a packet-switch core 34 such as, for example, the Internet 42.

The MSC 26, SGSN 30, GGSN 32 and operator IP network 36 constitute a so-called core network 38. The SGSN 30 and GGSN 32 are connected by an operator IP network 36 to a femtocell controller/gateway 40.

The femtocell controller/gateway 40 is connected via the Internet 42 to the femtocell base stations 18. These connections to the femtocell controller/gateway 40 are broadband Internet Protocol connections ("backhaul") connections.

It is possible for a mobile user terminal 11 within the macrocell 16 to communicate with the macrocell base station 12 in known manner. When the mobile user terminal 11 enters into a femtocell 20 for which the mobile terminal is registered for communications within the femtocell base station 18, it is desirable to handover the connection with the mobile terminal from the macrocell to the femtocell.

It will be understood that, although not all shown in Figure 2, there are multiple RNCs, macrocell base stations, and small cell base stations in the network.

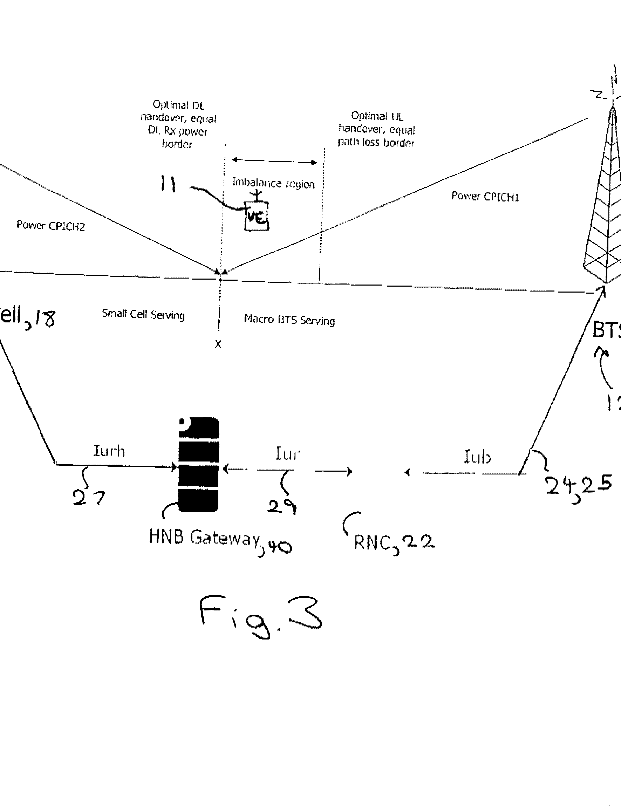

As shown in Figure 3, the macrocell base station 12 that is here denoted BTS (base transceiver station) in UMTS terminology, is connected to an Radio Network Controller 22 via the backhaul communications link 24 more specifically the Iub interfarce 25.

A small cell base station 18, also known as a HNB (Home Node B) using UMTS terminology, is connected via an Iurh interface 27 to a small cell controller/gateway 40 here denoted the HNB-gateway.

The RNC 22 is connected to the HNB-gateway 40 via an Iur interface 29.

As will be understood, the Iub, Iur and Iurh interfaces are logical interfaces that make use of various network elements shown in Figure 2 as appropriate.

### UMTS Example - Uplink-resource allocation message

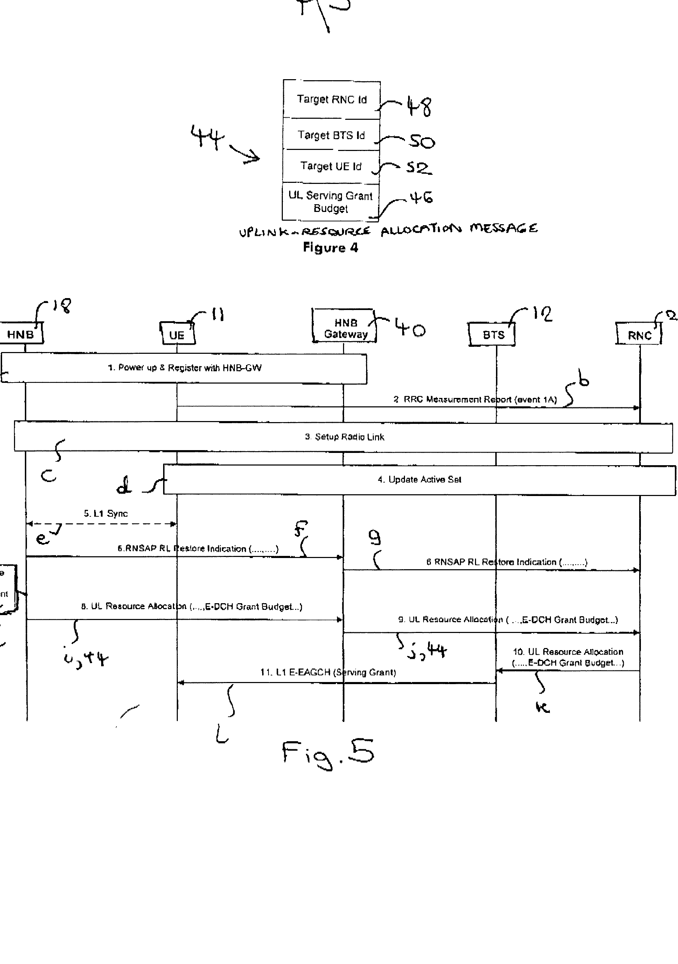

As shown in Figure 4, a specific message 44 is used sent over the Iurh, Iur and lub interfaces from the small cell base station 18 to the macrocell base station 12. This is an Uplink-resource allocation message 44 that carries information about the uplink-resources allocated to the user terminal, specifically the Uplink-Serving Grant 46 (which is the maximum amount of data the small cell base station 18 permits the user terminal 11 to send in an uplink transmission from the user terminal 11).

An updated message 44 is frequently determined and sent with an altered or updated Uplink-Serving Grant as the small cell base station seeks to provide good service to both the user terminal 11 and other user terminals (not shown) having varying resource demands. The small cell base station in practice often manages Uplink-Serving Grants to multiple user terminals having various resource demands simultaneously, so the small cell base station 18 often varies the Uplink-Serving Grant to the user terminal 11 during the period of its uplink-downlink decoupling.

In this example the uplink-resources are E-DCH resources and uplink data is E-DCH data.

The Uplink-resource allocation message 44 also includes a target RNC identifier (Target RNC Id, 48), a target macrocell base station identifier (Target BTS Id, 50) and a target user terminal identifier (Target UE Id, 52).

The message 44 is sent from the small cell base station (HNB) 18 to the user terminal 11 via the HNB-gateway 40, RNC 22 and macrocell base station 12 when the uplink and downlink of the user terminal are decoupled but the HNB 18 has responsibility for allocating the Uplink Serving Grant to the user terminal.

The Target RNC Id field 48 is used by the HNB-gateway 40 to identify the correct RNC 22. The Target BTS Id field 50 is used by the RNC 22 to identify the correct macrocell base station 12. The Target UE Id is used by the macrocell base station 12 to identify the correct user terminal 11.

This example is one possible way of providing information to allow the HNB to identify the user terminal to other nodes that handle the Uplink-resource allocation message on its behalf. (In other embodiments, other combinations of identifies are possible.)

The message 44 also includes the Uplink Serving Grant which needs to be sent to the user terminal. The Uplink Serving Grant is calculated by the HNB 18 whenever required. In practice, this is frequently, as explained below.

### UMTS Example -Operation

In this example shown in Figures 2 and 3, the user terminal 11 enters the small cell 20 (in other words the radio coverage area of the HNB 18) which the user terminal detects. Accordingly, the 'Active Set' record in the user terminal of which base stations may be connected to is updated to include the HNB 18. Subsequently the uplink is decoupled from the downlink so that the HNB 18 is responsible for providing the Uplink Serving Grant to the user terminal. As this user terminal is a pre -3GPP Release 12 user terminal (often denoted a legacy user terminal), this information is sent via the macro-network, specifically via the HNB-gateway 40, RNC 22, and macrocell base station 12 in the uplink-resource allocation message 44.

To explain this operation in more detail, we now refer to Figure 5.

As shown in Figure 5, the small cell base station 18 is deployed (step a) by an end user so boots up and registers with the HNB-gateway 40.

The user terminal 11 which is attached to the macrocell base station 12 roams towards the small cell base station 18 and at a certain point the user terminal 11 determines that the downlink channel quality from the small cell base station is greater than a predetermined threshold so sends (step b) a measurement report to the RNC 22 requesting that the small cell base station 18 be added to the user terminal's Active Set record.

The RNC 22 establishes (step c) a radio link to the small cell base station 18 via the HNB-gateway 40.

The RNC 22 then updates (step d) the user terminal's Active Set.

The user terminal 11 then synchronises (step e) its Layer 1 signalling clock to that of the small cell base station 18.

The small cell base station 18 indicates to the RNC 22 that the user terminal has performed Layer1 synchronisation by sending (step f) a Radio Network Subsystem Application Part (RNSAP) radio link (RL) Restore Indication message to the HNB-gateway 40 which forwards (step g) that message on to the RNC 22.

The small cell base station 18 then determines (step h) the Uplink Serving Grant (also known as the E-DCH Serving Grant budget in this example).

The small cell base station then sends (step i) this information using the Uplink-resource allocation message 44 shown in Figure 4 to the HNB-gateway 40.

The HNB-gateway 40 forwards (step j) the message to the correct RNC 22 by using the RNC identity provided in the message 44.

The RNC 22 forwards (step k) the received message to the correct macrocell base station 12 by using the target macrocell base station identity (Target BTS Id) in the message 44.

The macrocell base station 12 identifies from the Uplink-resource allocation message which user terminal the information is intended for and sends (step *l*) the information, namely the Uplink Serving Grant (specifically the E-DCH Serving Grant Budget) to the user terminal 11.

The above-described process from step h onwards is then repeated whenever the user terminal's uplink resources need to be updated, during the time in which the uplink and downlink are decoupled. This is triggered by the small cell base station 18 receiving data in an uplink transmission from the user terminal 11 and determining that the maximum amount of data, namely the Uplink Serving Grant, that can be received in the next uplink transmission can be altered.

### LTE Example

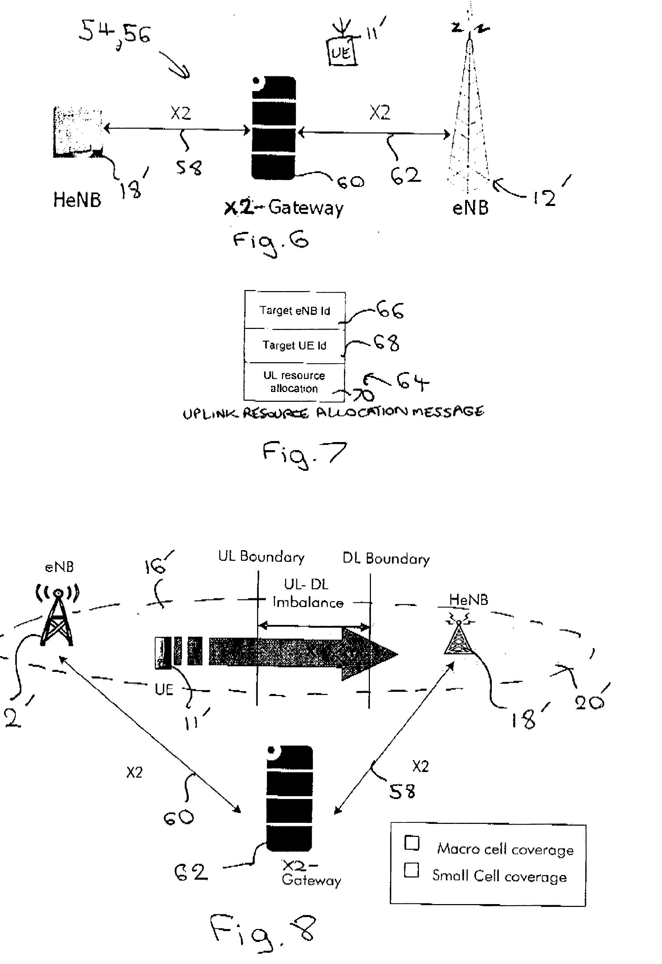

A Long Term Evolution type of wireless cellular communications system 54 includes a heterogeneous network 56 as shown in Figure 6. This uses an X2 interface 58 between the small cell base station (Home eNodeB, HeNB) 18' and the X2-gateway 60. There is also an X2 interface 62 between the X2-gateway 60 and the macrocell base station (enhanced NodeB, eNB) 12'. (Support for an X2-gateway and associated X2 interfaces is currently being specified for 3GPP Release 12).

In this example, when the uplink and downlink are decoupled, the small cell base station assumes responsibility for allocating uplink data budgets to the user terminal, in other words the amount of data that the user terminal can send uplink in a next transmission.

The uplink data budget is sent in an Uplink-resource allocation message sent from the small cell base station 18' via the X2-gateway 60 and macrocell base station 12' to the user terminal 11'.

In this example, the Uplink-resource allocation message has the format shown in Figure 7. Specifically the message 64 includes a Target macrocell base station identifier (Target eNB Id) 66, and a Target User Terminal identifier (Target UE Id) 68 in addition to the uplink data budget 70. The Target eNB Id is used by the X2-gateway to identify the correct macrocell base station and the Target UE Id is used by the macrocell base station to identify the correct user terminal. (In other embodiments other combinations of identity are possible to get an Uplink-resource allocation message to the user terminal via the macro network.)

The uplink data budget 70 is the uplink resource allocation budget which in this example is the number of physical resource blocks (PRBs) that can be used in a subsequent transmission by the user terminal. This value is recalculated frequently as the small cell base station 18' seeks to dynamically balance/optimise uplink data budgets to the user terminal 11' and other user terminals (not shown).

Operation of this example is shown in morse detail in Figure 8, where macrocell coverage is denoted 16' and small cell coverage is denoted 20'.

The user terminal 11' roams from the macrocell base station 12' towards the small cell base station 18'. The user terminal enters the small cell coverage area 20' and at point marked X in the diagram uplink-downlink decoupling is triggered; in other words the small cell base station assumes responsibility for uplink-resource allocation, specifically UL-SCH (Uplink shared channel) resource allocation to the user terminal.

Referring to Figures 7 and 8, in this example, the user terminal is 3GPP Release 12 compliant, so the small cell base station would normally pass the UL-SCH resource allocation information directly to the user terminal. However, in this example, the user terminal is then in a location where the quality of the small cell base station's downlink signal is not good enough to be able to carry the Uplink-resource allocation information directly to the user terminal without error. Instead, the small cell base station sends the Uplink-resource allocation information in the message 64 to the X2-gateway 62 over the established X2 interface 58. The X2-gateway 62 uses in formation 66 in the message 64 to identify the correct macrocell base station 12' and forwards the message 64 to that macrocell base station 12'. The macrocell base station 12' in turn uses information 68 in the message 64 to identify the correct user terminal and send the Uplink data budget 70 to that user terminal.

The Uplink data budget 70 is a Layer1 resource allocation message.

Over the time, as illustrated schematically in Figure 8, the user terminal 11' moves closer to the small cell base station 18', such that at a point Y, uplink and downlink cease to be decoupled. The small cell base station 18' starts sending the Uplink data budget which is a Layer1 resource allocation message directly to the user terminal 11' where the message is successfully received. The uplink resource allocation message 64 is no longer sent via the macro network; specifically no longer via the X2 interfaces 58, 60 and the X2-gateway 62.

### Some alternative embodiments

In the above described UMTS example, the Uplink Serving Grant is provided to the user terminal. In another similar embodiment, the HNB provides the user terminal with the Target Uplink transmit power. This is used to control the transmit power of the user terminal when the user terminal involved is uplink-downlink decoupled (e.g. not in a region of soft handover or extended soft handover and unable to detect any power control command over air directly from the HNB).

### General

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of sending a control message to a user terminal that is uplink-connected to a small cell base station and downlink-connected to another base station in a wireless cellular telecommunications network, the base stations being interconnected by at least one core network node,
the method comprising the steps of:
the small cell base station formatting the control message,
transmitting the control message from the small cell base station via the at least one core network node to said another base station,
said another base station transmitting said control message over air to the user terminal for reception,
in which the network comprises multiple base stations and user terminals, and the message comprises an identifier of said another base station and an identifier said user terminal.

2. A method according to claim 1, in which the message is directed to said another base station using the identifier of said another base station.

3. A method according to claim 1 or 2, in which said at least one core network node comprises multiple core network nodes, and the message also includes an identifier of a second of said at least one core network nodes used by the first core network node to direct the message to the second core network node.

4. A method according to any preceding claim, in which said another base station is a macrocell base station.

5. A method according to any preceding claim, in which the at least one core network node comprises a gateway.

6. A method according to any preceding claim, in which the message comprises an indicator of the amount of uplink-resource available to the user terminal in a subsequent transmission.

7. A method according to claim 6, in which the indicator is directed to the correct user terminal by said another base station using the identifier of the user terminal in the message.

8. A method according to claim 6 or claim 7, in which the amount of uplink resource available in a subsequent transmission is the maximum amount of data that the user terminal is permitted to send uplink to the small cell base station in said subsequent transmission.

9. A method according to any of claims 6 to 8, in which the small cell base station periodically determines the maximum amount of data permitted in a subsequent transmission from the user terminal and sends that updated information in further messages via the at least one core network node to said another base station for over air transmission to the user terminal.

10. A method according to any preceding claim, in which said at least one core network node comprises an X2-gateway.

11. A method according to any of claims 1 to 9, in which said at least one core network node comprises a small cell gateway and a radio network controller.

12. A method according to any preceding claim, in which the user terminal is not 3GPP Release 12 compliant, or the user terminal is 3GPP Release 12 compliant but the quality of the downlink signal transmitted from the small cell base station to the user terminal is insufficient for the user terminal to receive the control message directly from said small cell base station.

13. A small cell base station for cellular wireless telecommunications,
the small cell base station being configured:
to detect that a user terminal is uplink-connected to the small cell base station but not downlink-connected to the small cell base station,
to format a control message including identifiers of another base station and the user terminal,
to transmit the control message towards at least one core network node for forwarding via said another base station to the user terminal.

14. A core network node in a cellular wireless telecommunications network, the core network node being configured to:
receive a control message from a small cell base station including identifiers of another base station and the user terminal and an indicator of the maximum amount of uplink-resource available to the user terminal in a subsequent transmission, the user terminal being uplink-connected to the small cell base station and down-link connected to said another base station,
transmit the control message towards said another base station or a further core network node, for forwarding said indicator to the user terminal.

15. A macrocell base station for use in a cellular wireless telecommunications network, the macrocell base station being configured to:
receive a control message from a core network node, the control message including identifiers of said macrocell base station and a user terminal and an indicator of the maximum amount of uplink-resource available to the user terminal in a subsequent uplink transmission, the user terminal being uplink-connected to the small cell base station and down-link connected to said another base station, and
transmit the indicator over air towards the user terminal.

## Amended claims

### Amended claims in accordance with Rule 137(2) EPC.

1. A method of sending a control message to a user terminal that is uplink-connected to a small cell base station and downlink-connected to another base station in a wireless cellular telecommunications network, the base stations being interconnected by at least one core network node,
the method comprising the steps of:
the small cell base station formatting the control message,
transmitting the control message from the small cell base station via the at least one core network node to said another base station,
said another base station transmitting said control message over air to the user terminal for reception,
in which the network comprises multiple base stations and user terminals, and the message comprises an identifier said user terminal,
**characterised in that** the message comprises an identifier of said another base station, and
the at least one core network node comprises a gateway.

2. A method according to claim 1, in which the message is directed to said another base station using the identifier of said another base station.

3. A method according to claim 1 or 2, in which said at least one core network node comprises multiple core network nodes, and the message also includes an identifier of a second of said at least one core network nodes used by the first core network node to direct the message to the second core network node.

4. A method according to any preceding claim, in which said another base station is a macrocell base station.

5. A method according to any preceding claim, in which the message comprises an indicator of the amount of uplink-resource available to the user terminal in a subsequent transmission.

6. A method according to claim 5, in which the indicator is directed to the correct user terminal by said another base station using the identifier of the user terminal in the message.

7. A method according to claim 5 or claim 6, in which the amount of uplink resource available in a subsequent transmission is the maximum amount of data that the user terminal is permitted to send uplink to the small cell base station in said subsequent transmission.

8. A method according to any of claims 5 to 7, in which the small cell base station periodically determines the maximum amount of data permitted in a subsequent transmission from the user terminal and sends that updated information in further messages via the at least one core network node to said another base station for over air transmission to the user terminal.

9. A method according to any preceding claim, in which said at least one core network node comprises an X2-gateway.

10. A method according to any of claims 1 to 8, in which said at least one core network node comprises a small cell gateway and a radio network controller.

11. A method according to any preceding claim, in which the user terminal is not 3GPP Release 12 compliant, or the user terminal is 3GPP Release 12 compliant but the quality of the downlink signal transmitted from the small cell base station to the user terminal is insufficient for the user terminal to receive the control message directly from said small cell base station.

12. A small cell base station for cellular wireless telecommunications,
the small cell base station being configured:
to detect that a user terminal is uplink-connected to the small cell base station but not downlink-connected to the small cell base station,
to format a control message including an identifier of the user terminal,
to transmit the control message towards at least one core network node for forwarding via another base station to the user terminal,
**characterised in that** the control message from the small cell base station also includes an identifier of said another base station, and
said core network node comprises a gateway.

13. A core network node in a cellular wireless telecommunications network, the core network node being configured to:
receive a control message from a small cell base station including an identifier of the user terminal and an indicator of the maximum amount of uplink-resource available to the user terminal in a subsequent transmission, the user terminal being uplink-connected to the small cell base station and down-link connected to another base station,
transmit the control message towards said another base station or a further core network node, for forwarding said indicator to the user terminal,
**characterised in that** the control message from the small cell base station also includes an identifier of said another base station, and
said core network node comprises a gateway.
